# EUROPEAN PATENT SPECIFICATION

(11) **EP 2 796 745 B1**
(45) Date of publication and mention of the grant of the patent: **02.12.2015**
(21) Application number: 14161733.2
(22) Date of filing: 26.03.2014
(51) Int. Cl.: F16F 9/32, B60G 17/06, B61F 5/24

(54) **Hydraulic shock absorber**
Hydraulischer Stoßdämpfer
Amortisseur hydraulique

(30) Priority: 26.04.2013 JP 2013093985
(43) Date of publication of application: 29.10.2014
(73) Proprietor: Hitachi Automotive Systems, Ltd., Hitachinaka-shi Ibaraki 312-8503 (JP)
(72) Inventor: Shibahara, Kazuaki, Kanagawa, 210-0011 (JP)
(74) Representative: Hoffmann Eitle

(56) References cited:
- EP-A2- 0 339 617
- WO-A1-2013/015358
- GB-A- 2 283 466
- JP-A- S59 186 708

## Description

The present invention relates to a hydraulic shock absorber.

Conventionally, there has been known a damping force adjustable hydraulic shock absorber including an extension-side damping force generation mechanism and a compression-side damping force generation mechanism configured to be driven by solenoids (for example, refer to Japanese Patent Public Disclosure No. H09-264364).

For example, if an electromagnetic solenoid valve of the extension-side damping force generation mechanism (hereinafter referred to as an extension-side solenoid valve) is stuck at a soft side (hereinafter referred to as "stuck at the soft side"), a semi-active damper control system of a railway vehicle including a uniflow type hydraulic shock absorber capable of adjusting a damping force cannot generate a desired damping force when the vehicle is in a state requiring a hard characteristic. As a result, a vehicle body largely vibrates, thereby reducing a ride comfort and running stability of the vehicle.

The document GB2283466 discloses a method and apparatus for detecting failure of switchable suspension dampers.

The present invention has been contrived in consideration of the above-described circumstance, and an object thereof is to provide a hydraulic shock absorber capable of detecting that a damping force generation mechanism is stuck at the soft side.

To achieve the above-described object, according to an aspect of the present invention, a hydraulic shock absorber, which is configured to be disposed between relatively displaceable members, includes a cylinder sealingly containing hydraulic fluid, a piston slidably fitted in the cylinder and dividing an interior of the cylinder into two chambers, a piston rod having one end coupled to the piston and an opposite end extending out of the cylinder, an extension-side damping force generation mechanism configured to adjust an extension-side damping force by controlling a flow of the hydraulic fluid and configured to be driven by a solenoid, a compression-side damping force generation mechanism configured to adjust a compression-side damping force by controlling a flow of the hydraulic fluid and configured to be driven by a solenoid, and a control unit. The control unit includes a vibration detection unit configured to detect a vibration transmitted to one of the members, and a damping force adjustment unit configured to adjust a control current value of the solenoid according to a detection value of the vibration detection unit to adjust damping forces generated by the extension-side damping force generation mechanism and the compression-side damping force generation mechanism between a hard side and a soft side. Upon determining that the detection value of the vibration detection unit remains larger than a predetermined value for a certain time period with the extension-side damping force generation mechanism and the compression-side damping force generation mechanism set to the hard side, the control unit determines that the extension-side damping force generation mechanism or the compression-side damping force generation mechanism is stuck at the soft side.
Fig. 1 illustrates a semi-active damper control system including a uniflow type hydraulic shock absorber (a hydraulic shock absorber) according to a first embodiment.
Fig. 2 is a cross-sectional view illustrating the uniflow type hydraulic shock absorber according to the first embodiment taken along an axial plane of the hydraulic shock absorber.
Fig. 3 is a diagram for facilitating better understanding of the first embodiment, and illustrates how a system operates when a control mode is a semi-active control mode.
Fig. 4 is a diagram for facilitating better understanding of the first embodiment, and illustrates how the system operates when the control mode is a failure mode.
Fig. 5 is a diagram for facilitating better understanding of the first embodiment, and illustrates how the system operates when the control mode is a passive mode.
Fig. 6 is a table for facilitating better understanding of the first embodiment, and is a table that indicates how the system operates in each control mode.
Fig. 7 is a graph for facilitating better understanding of a second embodiment, and is a graph for comparing damping force lines of respective damping force generation mechanisms and valve opening pressures (actuation pressures) of the respective damping force generation mechanisms.
Fig. 8 is a diagram for facilitating better understanding of the second embodiment, and illustrates how the system operates when the control mode is the semi-active control mode.
Fig. 9 is a diagram for facilitating better understanding of the second embodiment, and is a cross-sectional view of a valve block taken along a plane including an extension-side damping force generation mechanism, a compression-side damping force generation mechanism, and a pilot type shutoff valve.
Fig. 10 is a diagram for facilitating better understanding of the second embodiment, and an axial cross-sectional view illustrating a pilot type shutoff valve in an actuated state in which a pilot pressure is supplied.
Fig. 11 illustrates a control flow according to the second embodiment.
Fig. 12 is a diagram for facilitating better understanding of the second embodiment, and illustrates the control system in a first operation state.
Fig. 13 is a diagram for facilitating better understanding of the second embodiment, and illustrates the control system in a second operation state.
Fig. 14 is a diagram for facilitating better understanding of the second embodiment, and illustrates the control system in a fifth operation state.
Fig. 15 is a diagram for facilitating better understanding of the second embodiment, and illustrates the control system in a sixth operation state.
Fig. 16 is a diagram for facilitating better understanding of a third embodiment, and illustrates how the system operates when the control mode is the semi-active control mode.
Fig. 17 is a diagram for facilitating better understanding of the third embodiment, and illustrates how the system operates when the control mode is the failure mode.
Fig. 18 is a diagram for facilitating better understanding of the third embodiment, and illustrates how the system operates in a passive mode when the extension-side damping force generation mechanism is stuck at the soft side.

### [FIRST EMBODIMENT]

A first embodiment of the present invention will be described with reference to the accompanying drawings. The first embodiment will be described based on an example employing a uniflow type hydraulic shock absorber (damper) designed for a semi-active damper control system of a railway vehicle as a hydraulic shock absorber. However, this example is not intended to limit the hydraulic shock absorber of the present invention thereby.

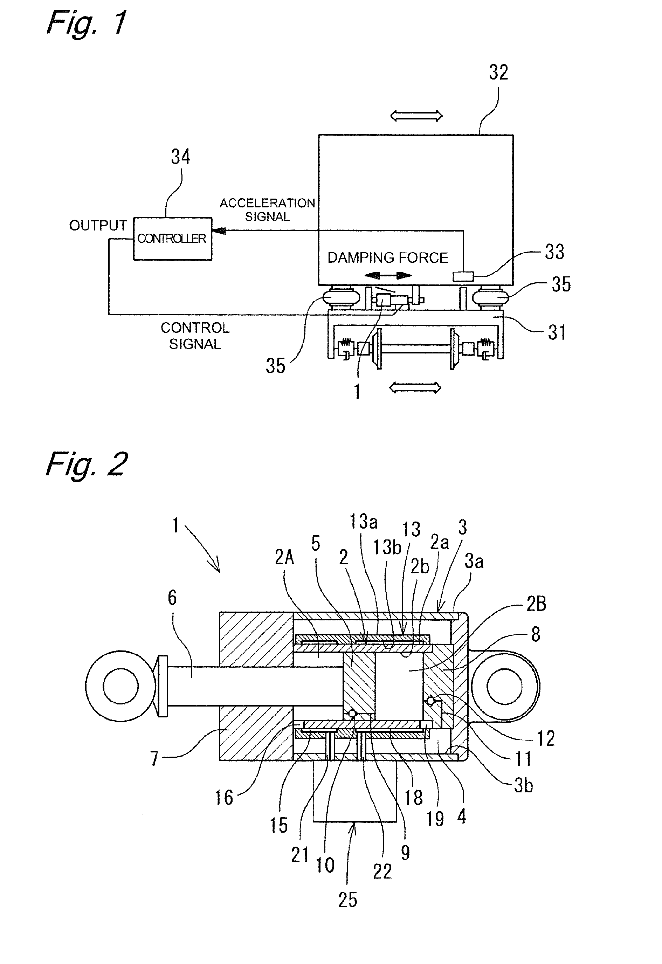

Fig. 1 illustrates a semi-active damper control system (hereinafter referred to as a control system as necessary) including a uniflow type hydraulic shock absorber 1 according to the first embodiment. As illustrated in Fig. 1, the control system includes the hydraulic shock absorber 1 (a hydraulic shock absorber) disposed between a bogie 31 and a vehicle body 32 (i.e. between members) relatively displaceable in a lateral direction of a railway vehicle (a horizontal direction in Fig. 1), an acceleration sensor 33 (a vibration detection unit) mounted on the vehicle body 32 (one of the members), and a controller 34 that performs semi-active control (for example, Skyhook control) on the hydraulic shock absorber 1 according to a detection value detected by the acceleration sensor 33, i.e., a vibration transmitted to the vehicle body 32. The vehicle body 32 is elastically supported by air springs 35 disposed between the bogie 31 and the vehicle body 32. The control unit includes the vibration detection unit, and a damping force adjustment unit that will be described below.

As illustrated in Fig. 2, the hydraulic shock absorber 1 has a double tube structure including an outer tube 3 disposed outside a cylinder 2. A reservoir 4 is defined between the cylinder 2 and the outer tube 3. A piston 5 is slidably and fittedly inserted in the cylinder 2, and the interior of the cylinder 2 is divided by the piston 5 into two cylinder chambers, a first cylinder chamber 2A and a second cylinder chamber 2B.

The piston 5 is coupled to one end of a piston rod 6 (a right-side end in Fig. 2). The piston rod 6 penetrates through the first cylinder chamber 2A, and is inserted through a rod guide 7 attached to ends of the cylinder 2 and the outer tube 3 on opening sides (the left side in Fig. 2). Then, an opposite end of the piston rod 6 (a left-side end in Fig. 2) extends out of the cylinder 2. A base valve 8, which separates the second cylinder chamber 2B and the reservoir 4, is attached to an end of the cylinder 2 (a right-side end in Fig. 2) opposite from the end to which the rod guide 7 is attached. Further, hydraulic fluid (hydraulic fluid) is sealingly contained in the cylinder 2, and the hydraulic fluid and gas are sealingly contained in the reservoir 4.

The piston 5 includes a flow passage 9 that establishes communication between the first cylinder chamber 2A and the second cylinder chamber 2B, and a check valve 10 that allows a flow of the hydraulic fluid (hydraulic oil) in the flow passage 9 from the second cylinder chamber 2B to the first cylinder chamber A while prohibiting a flow of the hydraulic fluid in the flow passage 9 from the first cylinder chamber 2A to the second cylinder chamber 2B. The base valve 8 includes a flow passage 11 that establishes communication between the second cylinder chamber 2B and the reservoir 4, and a check valve 12 that allows a flow of the hydraulic fluid in the flow passage 11 from the reservoir 4 to the second cylinder chamber 2B while prohibiting a flow of the hydraulic fluid in the flow passage 11 from the second cylinder chamber 2B to the reservoir 4.

The shock absorber 1 includes a passage member 13 formed into a cylindrical shape and fitted to an outer circumference of the cylinder 2. Tow annular grooves (unlabeled) are formed on an inner circumferential surface 13b of the passage member 13 so as to extend circumferentially and be spaced apart from each other axially (in the horizontal direction in Fig. 2). As a result, an annular flow passage 15 is defined between the annular groove on the left side in Fig. 2 and an outer circumferential surface 2a of the cylinder 2, and an annular flow passage 18 is defined between the annular groove on the right side in Fig. 2 and the outer circumferential surface 2a of the cylinder 2. Then, the annular flow passage 15 is in communication with the first cylinder chamber 2A via a flow passage 16 formed on a sidewall of the cylinder 2. The annular flow passage 18 is in communication with the second cylinder chamber 2B via a flow passage 19 formed on the sidewall of the cylinder 2.

As illustrated in Fig. 2, the outer tube 3 and the passage member 13 are connected to each other via a connection tube 21 in communication with the annular flow passage 15 and via a connection tube 22 in communication with the annular flow passage 18. A damping force generation apparatus 25 is attached to an outer circumferential surface 3a of the outer tube 3. The damping force generation apparatus 25 has the basic structure of the damping force generation apparatus according to the conventional technique (for example, Japanese Patent Public Disclosure No. H09-264364 (Patent Document 1)) including an extension-side damping force generation mechanism 26 and a compression-side damping force generation mechanism 27 that will be described below. For simplification of the description of the present disclosure, the known basic structure of the damping force generation apparatus 25 will not be specifically described herein.

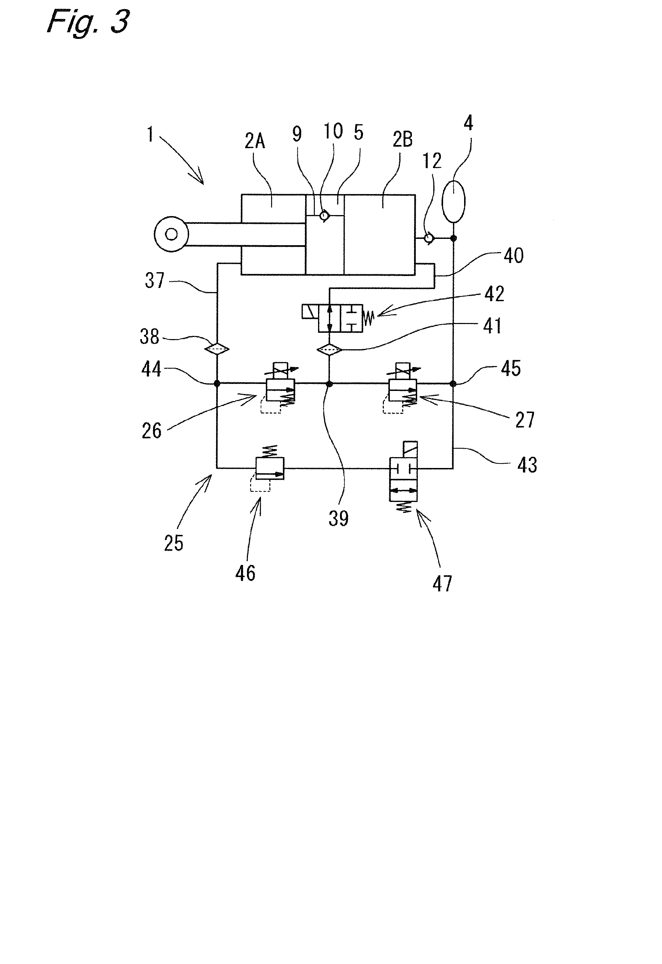

Fig. 3 illustrates an overview of a hydraulic circuit for facilitating better understanding of the damping force generation apparatus 25 in the uniflow type hydraulic shock absorber 1 according to the first embodiment. As illustrating in Fig. 3, the damping force generation apparatus 25 includes a flow passage 37 that connects the first cylinder chamber 2A and the second cylinder chamber 2B of the hydraulic shock absorber 1. A filter 38, the extension-side damping force generation mechanism 26, and the compression-side damping force generation mechanism 27 are disposed in the flow passage 37 in this order from the first cylinder chamber 2A to the second cylinder chamber 2B. In the first embodiment, a proportional solenoid valve is employed as each of the extension-side damping force generation mechanism 26 and the compression-side damping force generation mechanism 27. Hereinafter, the extension-side damping force generation mechanism 26 and the compression-side damping force generation mechanism 27 will be referred to as the proportional solenoid valve 26 and the proportional solenoid valve 27 as necessary. The extension-side damping force generation mechanism 26 and the compression-side damping force generation mechanism 27 are not limited to a proportional solenoid valve. A device configured to be driven by an actuator to generate a damping force, such as a solenoid on/off valve may be employed as each of the extension-side damping force generation mechanism 26 and the compression-side damping force generation mechanism 27.

The damping force generation apparatus 25 includes a flow passage 40 that connects a branch portion 39, which is provided between the proportional solenoid valve 26 and the proportional solenoid valve 27 in the flow passage 37, and the second cylinder chamber 2B. A filter 41 and a second open/close valve 42 (a valve mechanism) are disposed in the flow passage 40 in this order from the branch portion 39 to the second cylinder chamber 2B. Further, the damping force generation apparatus 25 includes a bypass passage 43 that bypasses the proportional solenoid valve 26 and the proportional solenoid valve 27. A passive damping force generation mechanism 46 (hereinafter referred to as the passive valve 46 as necessary) and a first open/close valve 47 (the valve mechanism) are disposed in the bypass passage 43 in this order from a branch portion 44 to a branch portion 45, which branch the flow passage 37.

Further, the second open/close valve 42 is embodied by a normally closed electromagnetic solenoid valve. Fig. 3 shows an opened state of the second open/close valve 42 when it is powered on or energized. Further, the first open/close valve 47 is embodied by a normally opened electromagnetic solenoid valve. Fig. 3 shows a closed state of the first open/close valve 47 when it is powered on or energized. Further, the passive valve 46 is embodied by a relief valve that generates a damping force of a passive characteristic according to a flow of the hydraulic fluid, i.e., a movement speed of the piston 5. Further, the above-described controller 34 includes a damping force control unit (the damping force adjustment unit) that adjusts control current values to be supplied to the electromagnetic solenoids of the proportional solenoid valve 26 and the proportional solenoid valve 27 according to an acceleration signal detected by the acceleration sensor 33 to adjust damping forces generated by the extension-side damping force generation mechanism 26 and the compression-side damping force generation mechanism 27 between the hard side and the soft side.

Next, an operation of the first embodiment will be described.

### [SEMI-ACTIVE CONTROL MODE]

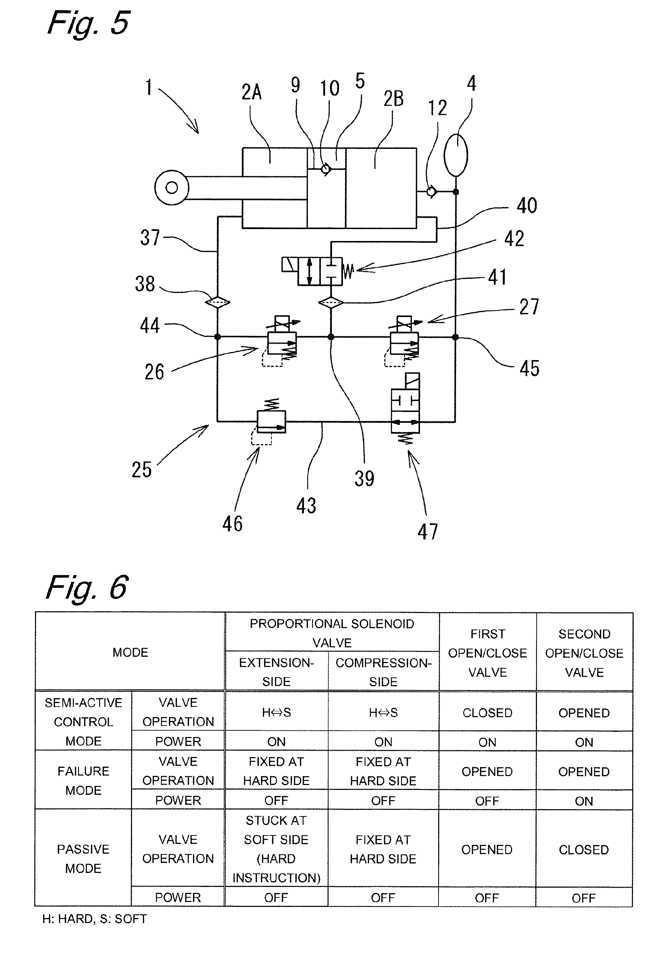

Fig. 3 illustrates how the control system operates when a control mode of the damping force generation apparatus 25 by the controller 34 (hereinafter referred to as the control mode) is a semi-active control mode. As illustrated in Figs. 3 and 6, in the semi-active control mode, the first open/close valve 47 (the valve mechanism) is powered on and is set in a closed state, while the second open/close valve 42 (the valve mechanism) is powered on and is set in an opened state.

During an extension stroke of the hydraulic shock absorber 1 (hereinafter referred to as the extension stroke), the proportional solenoid valve 26 (the extension-side damping force generation mechanism) is subjected to on-road control while the proportional solenoid valve 27 (the compression-side damping force generation mechanism) is subjected to off-road control (fixed at the soft side). During this extension stroke, the hydraulic fluid in the first cylinder chamber 2A is introduced into the flow passage 37, and is then introduced into the flow passage 40 via the filter 38 and the proportional solenoid valve 26. Then, the hydraulic fluid introduced into the flow passage 40 is supplied into the second cylinder chamber 2B via the filter 41 and the second open/close valve 42. At this time, the transmission of the hydraulic fluid via the proportional solenoid valve 26 causes an extension-side damping force to be generated according to a control current supplied from the controller 34 to the electromagnetic solenoid of the proportional solenoid valve 26. The hydraulic fluid for compensation for a volume of the piston rod 6 is supplied from the reservoir 4 into the second cylinder chamber 2B.

Further, during a compression stroke of the hydraulic shock absorber 1 (hereinafter referred to as the compression stroke), the proportional solenoid valve 27 is subjected to the on-road control while the proportional solenoid valve 26 is subjected to the off-road control (fixed at the soft side). During this compression stroke, the hydraulic fluid in the second cylinder chamber 2B is introduced into the first cylinder chamber 2A via the flow passage 9 and the check valve 10. Then, the hydraulic fluid for compensation for the volume of the piston rod 6 is introduced into the flow passage 40, and is then introduced into the flow passage 37 via the second open/close valve 42 and the filter 41. Then, the hydraulic fluid introduced into the flow passage 37 is supplied into the reservoir 4 via the proportional solenoid valve 27. At this time, the transmission of the hydraulic fluid via the proportional solenoid valve 27 causes a compression-side damping force to be generated according to a control current supplied from the controller 34 to the electromagnetic solenoid of the proportional solenoid valve 27.

### [FAILURE MODE]

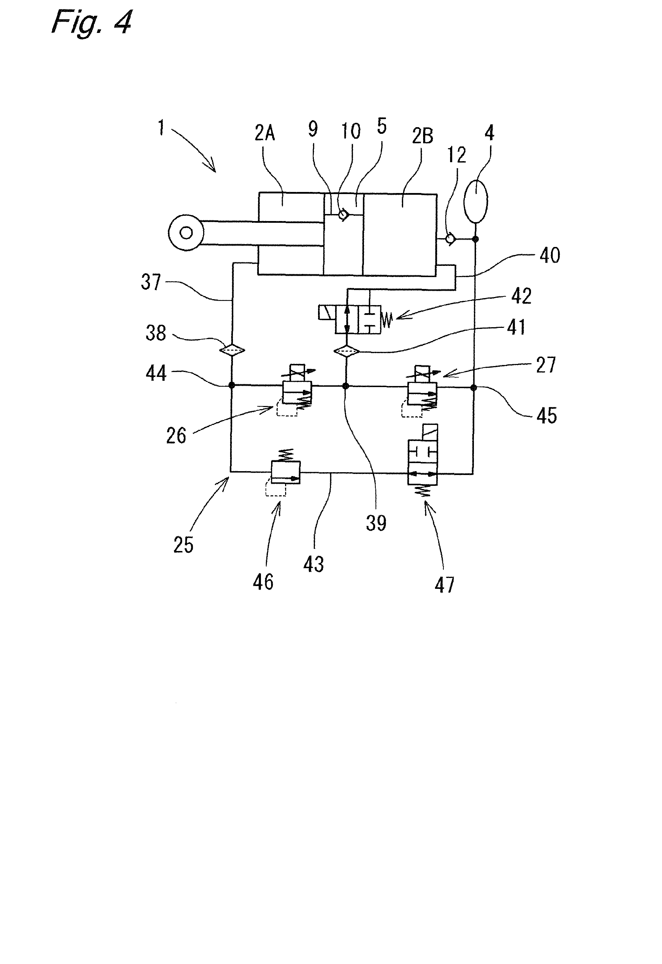

On the other hand, upon determining that a vibration of the vehicle body 32 exceeds a predetermined threshold value, the controller 34 determines that abnormality occurs in the control system, and switches the control mode from the semi-active control mode to the failure mode. As illustrated in Figs. 4 and 6, in the failure mode, the controller 34 powers off the proportional solenoid valve 26 (the extension-side damping force generation mechanism) and the proportional solenoid valve 27 (the compression-side damping force generation mechanism) to fix them at the hard side, and powers off the first open/close valve 47 to open it.

According to the first embodiment, the controller 34 can determine that a vibration of the vehicle body 32 exceeds the predetermined threshold value, i.e., that abnormality occurs in the control system, based on a known method such as a method of comparing an acceleration of the vehicle body 32 calculated based on a detection value of the acceleration sensor 33 with a threshold value, a method of comparing an integral value of an acceleration per unit time with respect to the vehicle body 32 with a threshold value, a method of comparing vehicle information (vehicle speed information and positional information) with previous data, a method of calculating a ride comfort level per distance or time to compare it with a threshold value, a method of comparing a pressure value of each of the proportional solenoid valves 26 and 27 detected by a pressure sensor with a threshold value, or a combination of these methods.

During the extension stroke in the failure mode, the hydraulic fluid in the first cylinder chamber 2A is introduced into the flow passage 37, and is then introduced into the bypass passage 43 via the filter 38. Then, the hydraulic fluid introduced into the bypass passage 43 is supplied into the second cylinder chamber 2B via the passive valve 46, the first open/close valve 47, and the flow passage 37. At this time, the transmission of the hydraulic fluid via the passive valve 46 causes a damping force of the passive characteristic to be generated according to the flow of the hydraulic fluid, i.e., the movement speed of the piston 5. The hydraulic fluid for compensation for the volume of the piston rod 6 is supplied from the reservoir 4 into the second cylinder chamber 2B.

Further, during the compression stroke in the failure mode, the hydraulic fluid in the second cylinder chamber 2B is introduced into the first cylinder chamber 2A via the flow passage 9 and the check valve 10. Then, the hydraulic fluid for compensation for the volume of the piston rod 6 is introduced from the first cylinder chamber 2A into the flow passage 37, and is then introduced into the bypass passage 43 via the filter 38. Then, the hydraulic fluid introduced into the bypass passage 43 is transmitted via the passive valve 46 and the first open/close valve 47, and is further transmitted via the flow passage 37 to be supplied into the reservoir 4. At this time, the transmission of the hydraulic fluid via the passive valve 46 causes a damping force of the passive characteristic to be generated according to the flow of the hydraulic fluid.

### [PASSIVE MODE]

For example, when the extension-side damping force generation mechanism (the proportional solenoid valve 26) is stuck at the soft side, the conventional technique cannot generate a desired damping force larger than the soft side even if an instruction for a current corresponding to a higher damping force than the soft side is issued, because the proportional solenoid valve 26 is stuck at the soft side so that the hydraulic fluid flows via the stuck proportional solenoid valve 26 and the second open/close valve 42. As a result, the vehicle body 32 vibrates largely, thereby reducing the ride comfort and running stability of the vehicle.

Therefore, according to the first embodiment, if a larger vibration than a preset vibration continuously occurs for a predetermined time period, the controller 34 switches the control mode from the semi-active control mode to the failure mode, i.e., the proportional solenoid valve 26 (the extension-side damping force generation mechanism) and the proportional solenoid valve 27 (the compression-side damping force generation mechanism) are set in states powered off and fixed at the hard side. Then, if a larger vibration than a preset vibration continues after the failure mode is maintained for a predetermined certain time period, the controller 34 determines that the proportional solenoid valve 26 or the proportional solenoid valve 27 is stuck at the soft side, and switches the control mode from the failure mode to the passive mode.

Fig. 5 illustrates how the control system operates when the control mode is the passive mode. As illustrated in Figs. 5 and 6, in the passive mode, the controller 34 powers off the second open/close valve 42 to close it. The first open/close valve 47 is held in the opened state by being powered off, and the proportional solenoid valve 26 (the extension-side damping force generation mechanism) and the proportional solenoid valve 27 (the compression-side damping force generation mechanism) remain fixed at the hard side by being powered off.

During the extension stroke in the passive mode, the hydraulic fluid in the first cylinder chamber 2A is introduced into the flow passage 37, and is introduced into the bypass passage 43 via the filter 38. Then, the hydraulic fluid introduced into the bypass passage 43 is transmitted via the passive valve 46 and the first open/close valve 47, and is further transmitted via the flow passage 37 to be supplied into the second cylinder chamber 2B. At this time, the transmission of the hydraulic fluid via the passive valve 46 causes a damping force of the passive characteristic to be generated according to the flow of the hydraulic fluid, i.e., the moving speed of the piston 5. The hydraulic fluid for compensation for the volume of the piston rod 6 is supplied from the reservoir 4 into the second cylinder chamber 2B.

Further, during the compression stroke in the passive mode, the hydraulic fluid in the second cylinder chamber 2B is introduced into the first cylinder chamber 2A via the flow passage 9 and the check valve 10. Then, the hydraulic fluid for compensation for the volume of the piston rod 6 is introduced from the first cylinder chamber 2A into the flow passage 37, and is then introduced into the bypass passage 43 via the filter 38. Then, the hydraulic fluid introduced into the bypass passage 43 is transmitted via the passive valve 46 and the first open/close valve 47, and is further transmitted via the flow passage 37 to be supplied into the reservoir 4. At this time, the transmission of the hydraulic fluid via the passive valve 46 causes a damping force of the passive characteristic to be generated according to the flow of the hydraulic fluid.

### [EFFECT]

According to the conventional technique, if the proportional solenoid valve 26 (the extension-side damping force generation mechanism) or the proportional solenoid valve 27 (the compression-side damping force generation mechanism) is stuck at the soft side, the hydraulic shock absorber (the hydraulic shock absorber) cannot generate a damping force even if the control mode is switched from the semi-active control mode to the failure mode. As a result, the vehicle body 32 vibrates largely, thereby reducing the ride comfort and running stability of the vehicle.

Therefore, according to the first embodiment, when a state having abnormality (the failure mode) is maintained for the predetermined certain time period with the control mode switched from the semi-active control mode to the failure mode, i.e., the proportional solenoid valve 26 (the extension-side damping force generation mechanism) and the proportional solenoid valve 27 (the compression-side damping force generation mechanism) powered off and fixed at the hard side, the controller 34 determines that the proportional solenoid valve 26 or the proportional solenoid valve 27 is stuck at the soft side, and switches the control mode from the failure mode to the passive mode.

According to the first embodiment, the damping force generation apparatus 25 is configured in such a manner that the hydraulic fluid sent from the first cylinder chamber 2A by a movement of the piston 5 is not introduced into the semi-active control system, i.e., is introduced into the bypass passage 43 to be transmitted via the passive valve 46 (the passive damping force generation mechanism) in the passive mode, and therefore can generate a damping force of the passive characteristic according to the flow of the hydraulic fluid, i.e., the movement speed of the piston 5. Due to this configuration, even if the proportional solenoid valve 26 (the extension-side damping force generation mechanism) or the proportional solenoid valve 27 (the compression-side damping force generation mechanism) is stuck at the soft side, the uniflow type hydraulic shock absorber 1 (the hydraulic shock absorber) can function as a normal passive damper, i.e., can generate a damping force of the passive characteristic. As a result, even if the proportional solenoid valve 26 (the extension-side damping force generation mechanism) or the proportional solenoid valve 27 (the compression-side damping force generation mechanism) is stuck at the soft side, it is possible to secure the ride comfort and running stability of the vehicle. The proportional solenoid valve 26 (the extension-side damping force generation mechanism) or the proportional solenoid valve 27 (the compression-side damping force generation mechanism) may be a switching valve that is switched between two positions of the hard characteristic and the soft characteristic.

### [SECOND EMBODIMENT]

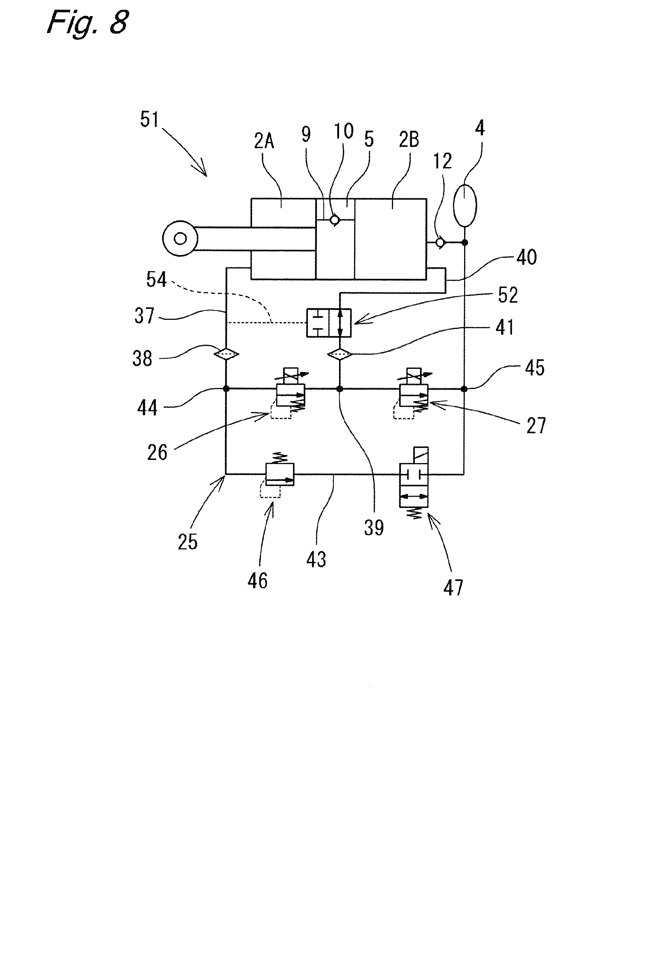

A second embodiment of the present invention will be described with reference to the accompanying drawings. Same or corresponding features as or to the above-described first embodiment will be identified by the same names and reference numerals. Further, for simplification of the description of the present disclosure, a description overlapping the first embodiment will be omitted below. As illustrated in Fig. 8, a uniflow type hydraulic shock absorber 51 according to the second embodiment is formed by replacing the second open/close valve 42 (refer to Figs. 3, 4, and 5) disposed in the flow passage 40 of the semi-active damper control system in the uniflow type hydraulic shock absorber 1 according to the first embodiment with a pilot type shutoff valve 52.

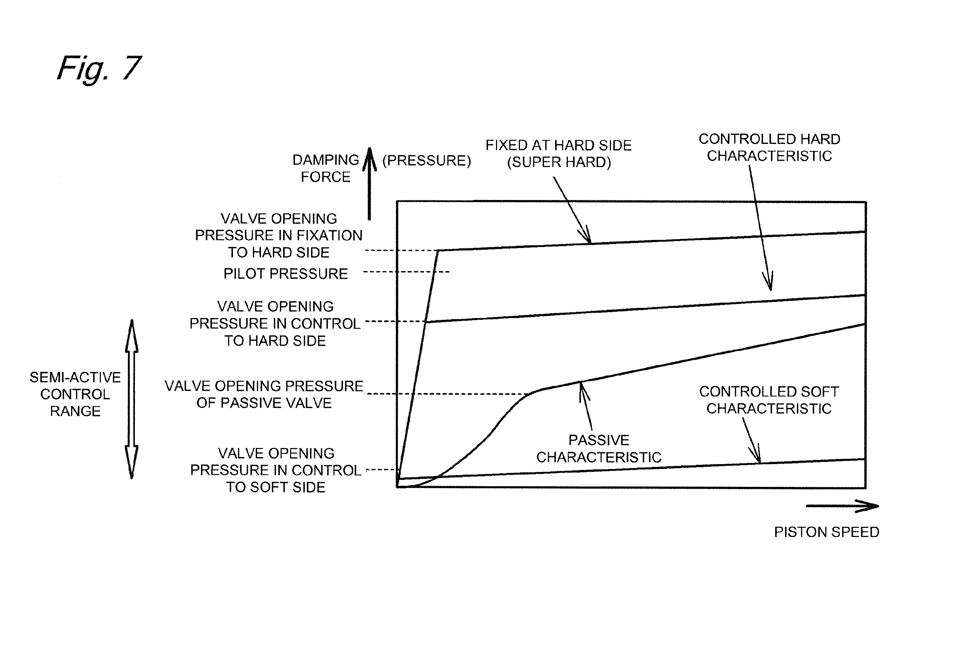

The pilot type shutoff valve 52 is switched from the opened state to the closed state when the pressure in the flow passage 37 (a pilot flow passage 54) increases to reach a predetermined pilot pressure. As seen from a graph illustrated in Fig. 7, the pilot pressure of the pilot type shutoff valve 52 is set so as to be lower than valve opening pressures (super hard valve opening pressures) of the proportional solenoid valve 26 (the extension-side damping force generation mechanism) and the proportional solenoid valve 27 (the compression-side damping force generation mechanism) that generate hard damping forces in the failure mode, and higher than valve opening pressures (hard-side valve opening pressures) of the proportional solenoid valves 26 and 27 that generate hard-side damping forces in the semi-active control mode.

As understood from Fig. 7, a valve opening pressure (a damping force) of the passive valve 46 (the passive damping force generation mechanism) is set so as to be higher than valve opening pressures (soft-side valve opening pressures, damping forces) of the proportional solenoid valves 26 and 27 that generate soft-side damping forces in the semi-active control mode, and lower than the valve opening pressures (hard-side valve opening pressures, damping forces) of the proportional solenoid valves 26 and 27 that generate the hard-side damping forces in the semi-active control mode.

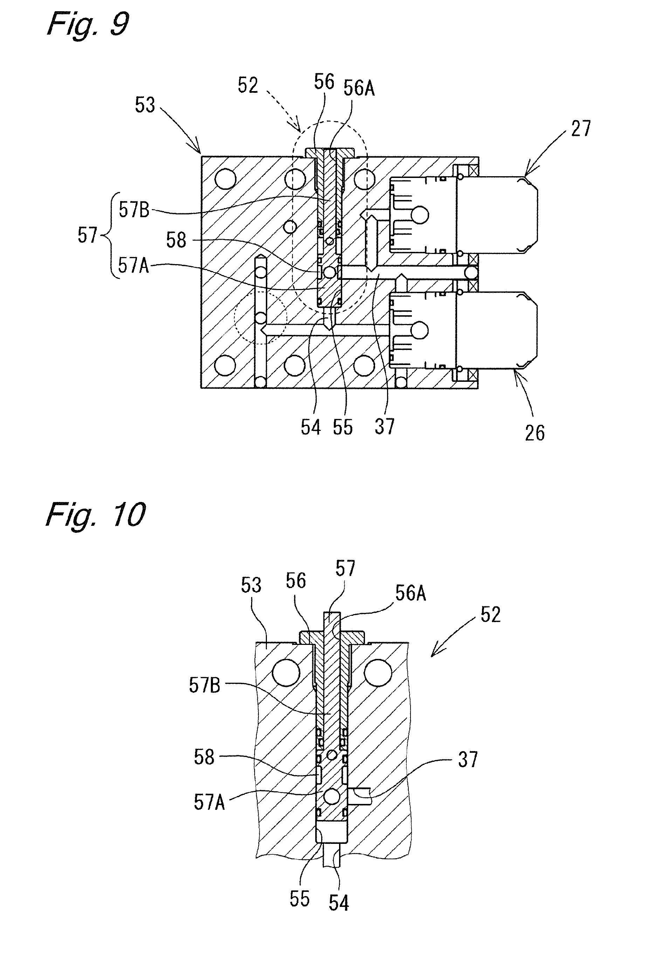

Fig. 9 is a cross-sectional view of a valve block 53 of the damping force generation apparatus 25, which is taken along a plane including the proportional solenoid valve 26 (the extension-side damping force generation mechanism), the proportional solenoid valve 27 (the compression-side damping force generation mechanism), and the pilot type shutoff valve 52. As illustrated in Fig. 9, the pilot type shutoff valve 52 includes a cylinder 55 having one end (a lower end in Fig. 9) connected to the flow passage 37 via a flow passage 54 (a pilot flow passage) and an opposite end opened to the outside of the valve block 53, a screw 56 fixed (screwed) in an opening of the cylinder 55, and a valve body 57 contained in the cylinder 55.

The valve body 57 includes a large-diameter portion 57A slidably fitted in the cylinder 55, and a small-diameter portion 57B slidably fitted in an axial hole 56A of the screw 56. A circumferentially extending annular groove (unlabeled) is formed around the large-diameter portion 57A, by which an annular flow passage 58 is defined between the annular groove and the cylinder 55. Then, when a pressure supplied from the first cylinder chamber 2A (refer to Fig. 2) via the flow passage 54 does not reach the pilot pressure (an actuation pressure) (refer to Fig. 9), the pilot type shutoff valve 52 establishes communication between the flow passage 37 between the proportional solenoid valve 26 and the proportional solenoid valve 27 and the flow passage 40 in communication with the second cylinder chamber 2B via the annular flow passage 58.

On the other hand, when the pressure supplied from the first cylinder chamber 2A via the flow passage 54 reaches the pilot pressure, as illustrated in Fig. 10, the valve body 57 moves axially (upwardly as viewed in Fig. 10) relative to the cylinder 55 in the pilot type shutoff valve 52. This movement shuts off the communication between the flow passage 37 between the proportional solenoid valve 26 and the proportional solenoid valve 27, and the flow passage 40 in communication with the second cylinder chamber 2B.

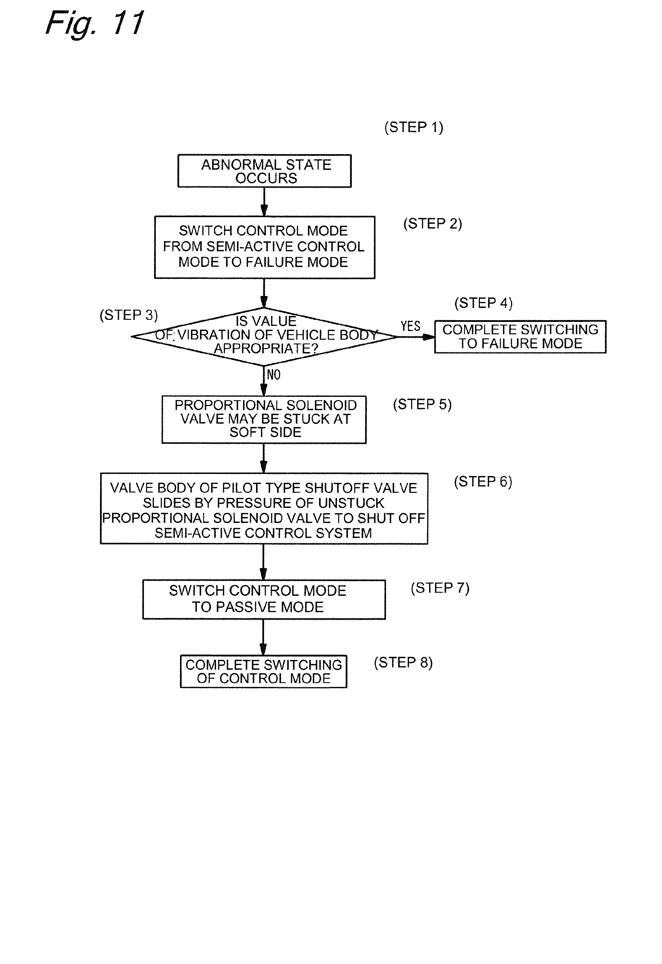

Next, an operation of the second embodiment will be described. Fig. 11 illustrates a control flow of the uniflow type hydraulic shock absorber 51 according to the second embodiment. In the semi-active control mode, the first open/close valve 47 (the valve mechanism) is powered on and is set in the closed state, and the pilot type shutoff valve 52 (the valve mechanism) is set in the opened state because the supplied pressure does not reach the pilot pressure. Therefore, during the extension stroke, a damping force adjusted by the proportional solenoid valve 26 (the extension-side damping force generation mechanism) is generated according to the control current supplied from the controller 34. During the compression stroke, a damping force adjusted by the proportional solenoid valve 27 (the compression-side damping force generation mechanism) is generated according to the control current supplied from the controller 34.

First, upon determining that a vibration of the vehicle body 32, i.e., a detection value of the acceleration sensor 33 (the vibration detection unit) exceeds the predetermined threshold value, the controller 34 determines that abnormality occurs in the control system (step 1 in Fig. 11), and switches the control mode from the semi-active control mode to the failure mode (step 2 in Fig. 11). In the failure mode, the controller 34 powers off the proportional solenoid valve 26 (the extension-side damping force generation mechanism) and the proportional solenoid valve 27 (the compression-side damping force generation mechanism) to fix them at the hard side.

Next, the controller 34 determines whether the vibration of the vehicle body 32 is appropriate (step 3 in Fig. 11). If the controller 34 determines at this time that the vibration of the vehicle body 32 is appropriate (YES in step 3 in Fig. 11), the controller 34 completes switching to the failure mode (step 4 in Fig. 11). On the other hand, if the controller 34 determines that the vibration of the vehicle body 32 is not appropriate (NO in step 3 in Fig. 11), the controller 34 determines that the proportional solenoid valve 26 or the proportional solenoid valve 27 is stuck at the soft side, when the state having abnormality is maintained for the predetermined certain time period with the control mode switched to the failure mode, i.e., the proportional solenoid valve 26 and the proportional solenoid valve 27 fixed at the hard side (step 5 in Fig. 11).

At this time, because the first open/close valve 47 is powered on and is in the closed state, the pressure increases in the proportional solenoid valve 26 or 27 that is not stuck at the soft side, i.e., that is fixed at the hard side, and thus the pressure in the first cylinder chamber 2A increases. Then, when the pressure in the flow passage 54 in communication with the first cylinder chamber 2A reaches the pilot pressure, this actuates the pilot type shutoff valve 52 to close it, thereby shutting off the flow of the hydraulic fluid into the proportional solenoid valve 26 and the proportional solenoid valve 27 (step 6 in Fig. 11).

Subsequently, the controller 34 switches the control mode from the failure mode to the passive mode (step 7 in Fig. 11). As a result, the first open/close valve 47 (the valve mechanism) is powered off and is opened, and the hydraulic fluid starts to be introduced into the bypass passage 43. The transmission of the hydraulic fluid flowing in the bypass passage 43 via the passive valve 46 causes a damping force of the passive characteristic to be generated according to the flow of the hydraulic fluid, i.e., the movement speed of the piston 5. Then, when the control mode is switched from the failure mode to the passive mode, switching of the control mode is completed (step 8 in Fig. 11).

Next, operation states of the control system of the uniflow type hydraulic shock absorber 51, which operates according to the above-described control flow, will be described.

### [FIRST OPERATION STATE]

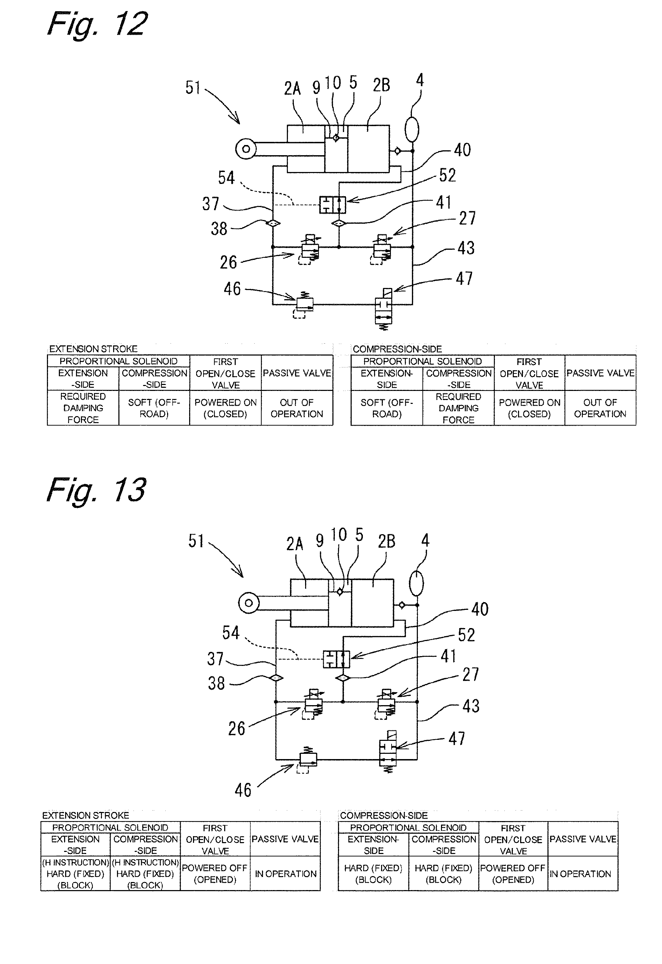

The first operation state is an operation state of the control system when the control mode is the semi-active control mode. Fig. 12 illustrates the control system in the first operation state. As illustrated in Fig. 12, in the first operation state, the pilot type shutoff valve 52 (the valve mechanism) is in the opened state. Further, the first open/close valve 47 (the valve mechanism) is powered on and is in the closed state, which shuts off a flow of the hydraulic fluid into the bypass passage 43.

During the extension stroke in the first operation state, the proportional solenoid valve 26 (the extension-side damping force generation mechanism) is subjected to the on-road control while the proportional solenoid valve 27 (the compression-side damping force generation mechanism) is subjected to the off-road control (fixed at the soft side). During this extension stroke, the hydraulic fluid in the first cylinder chamber 2A is introduced into the flow passage 37, and is then introduced into the flow passage 40 via the filter 38 and the proportional solenoid valve 26. Then, the hydraulic fluid introduced into the flow passage 40 is supplied into the second cylinder chamber 2B via the filter 41 and the pilot type shutoff valve 52. At this time, the transmission of the hydraulic fluid via the proportional solenoid valve 26 causes an extension-side damping force to be generated according to the control current supplied from the controller 34 to the electromagnetic solenoid of the proportional solenoid valve 26. The hydraulic fluid for compensation for the volume of the piston rod 6 is supplied from the reservoir 4 to the second cylinder chamber 2B.

Further, during the compression stroke in the first operation state, the proportional solenoid valve 27 is subjected to the on-road control while the proportional solenoid valve 26 is subjected to the off-road control (fixed at the soft side). During this compression stroke, the hydraulic fluid in the second cylinder chamber 2B is introduced into the first cylinder chamber 2A via the flow passage 9 and the check vale 10. Then, the hydraulic fluid for compensation for the volume of the piston rod 6 is introduced into the flow passage 40, and is then introduced into the flow passage 37 via the pilot type shutoff valve 52 and the filter 41. Then, the hydraulic fluid introduced into the flow passage 37 is supplied into the reservoir 4 via the proportional solenoid valve 27. At this time, the transmission of the hydraulic fluid via the proportional solenoid valve 27 causes a compression-side damping force to be generated according to the control current supplied form the controller 34 to the electromagnetic solenoid of the proportional solenoid valve 27.

### [SECOND OPERATION STATE]

On the other hand, upon determining that a vibration of the vehicle body 32 exceeds the predetermined threshold value, the controller 34 determines that abnormality occurs in the control system, and switches the control mode from the semi-active mode to the failure mode. The second operation state is an operation mode of the control system when the control mode is the failure mode. Fig. 13 illustrates the control system in the second operation mode. In the second operation mode, the proportional solenoid valve 26 (the extension-side damping force generation mechanism) and the proportional solenoid valve 27 (the compression-side damping force generation mechanism) are powered off and are fixed at the hard side, and the first open/close valve 47 is powered off and is set in the opened state. The second operation state is the operation state in step 4 in the control flow illustrated in Fig. 11.

During the extension stroke in the second operation state, the hydraulic fluid in the first cylinder chamber 2A is introduced into the flow passage 37, and is then introduced into the bypass passage 43 via the filter 38. Then, the hydraulic fluid introduced into the bypass passage 43 is transmitted via the passive valve 46 and the first open/close valve 47, and is further transmitting via the flow passage 37 to be supplied into the second cylinder chamber 2B. At this time, the transmission of the hydraulic fluid via the passive valve 46 causes a damping force of the passive characteristic to be generated according to the flow of the hydraulic fluid, i.e., the movement speed of the piston 5. The hydraulic fluid for compensation for the volume of the piston rod 6 is supplied from the reservoir 4 into the second cylinder chamber 2B.

Further, during the compression stroke in the second operation state, the hydraulic fluid in the second cylinder chamber 2B is introduced into the first cylinder chamber 2A via the flow passage 9 and the check valve 10. Then, the hydraulic fluid for compensation for the volume of the piston rod 6 is introduced from the first cylinder chamber 2A into the flow passage 37, and is then introduced into the bypass passage 43 via the filter 38. Then, the hydraulic fluid introduced into the bypass passage 43 is transmitted via the passive valve 46 and the first open/close valve 47, and is then supplied into the reservoir 4 via the flow passage 43. At this time, the transmission of the hydraulic fluid via the passive valve 46 causes a damping force of the passive characteristic to be generated according to the flow of the hydraulic fluid.

### [THIRD OPERATION STATE]

A third operation state is such a state that the proportional solenoid valve 26 (the extension-side damping force generation mechanism) is stuck at the soft side in the first operation state illustrated in Fig. 12. In the third operation state, the pilot type shutoff valve 52 is set in the opened state because the pressure in the flow passage 54 in communication with the first cylinder chamber 2A does not reach the pilot pressure. In the third operation state, flows of the hydraulic fluid during the extension stroke and the compression stroke are the same as the first operation state. Therefore, during the compression stroke, the damping force generation apparatus 25 can perform the semi-active control, i.e., can generate a damping force according to the control current of the controller 34. However, during the extension stroke, the damping force generation apparatus 25 cannot generate a damping force by the proportional solenoid valve 26. As a result, the vehicle vibrates largely. The third operation state is the operation state in step 1 in the control flow illustrated in Fig. 11.

### [FOURTH OPERATION STATE]

A fourth operation state is such a state that the proportional solenoid valve 26 (the extension-side damping force generation mechanism) is stuck at the soft side in the second operation state illustrated in Fig. 13. During the compression stroke in the fourth operation state, the damping force generation apparatus 25 can perform the semi-active control by a damping force generated by the proportional solenoid valve 27. However, during the extension stroke in the fourth operation state, the hydraulic fluid is not introduced into the bypass passage 43, and is released toward the proportional solenoid valve 26 stuck at the soft side corresponding a further lower valve opening pressure (a damping force). As a result, the damping force generation apparatus 25 cannot generate a damping force during the extension stroke, whereby the vehicle vibrates largely.

### [FIFTH OPERATION STATE]

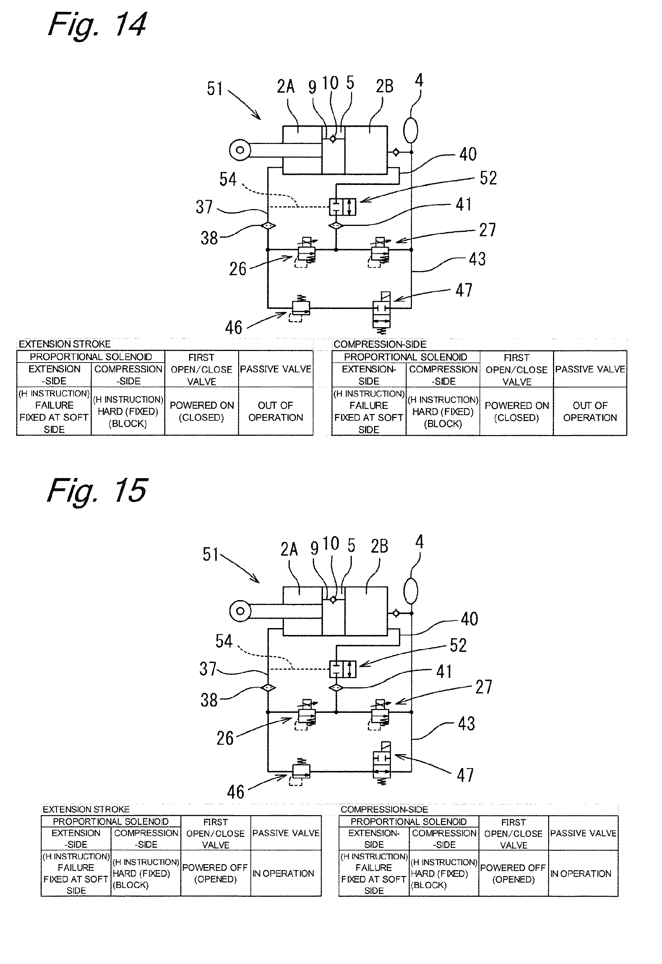

The fifth operation state is an operation state when a vibration of the vehicle exceeds a certain degree in the third operation state, i.e., the movement speed of the piston 5 exceeds a certain speed. As illustrated in Fig. 14, in the fifth operation state, the proportional solenoid valve 26 (the extension-side damping force generation mechanism) is stuck at the soft side (powered off and a hard instruction). The proportional solenoid valve 27 (the compression-side damping force generation mechanism) is powered off and is fixed at the hard side. The first open/close valve 47 (the valve mechanism) is powered on and is set in the closed state, thereby shutting off the flow of the hydraulic fluid to the bypass passage 43. Further, when the pressure in the flow passage 54 in communication with the first cylinder chamber 2A reaches the pilot pressure, the pilot type shutoff valve 52 is actuated to be closed.

During the compression stroke and the extension stroke in the fifth operation state, the hydraulic fluid is transmitted via the proportional solenoid valve 27 fixed at the hard side after being transmitted via the proportional solenoid valve 26. Therefore, the control system has a release characteristic fixed at the hard side. As a result, the hydraulic shock absorber 51 is set in a locked state, whereby the vehicle body 32 vibrates largely. Further, the ride comfort of the vehicle is deteriorated to provide a rattling uncomfortable feeling.

### [SIXTH OPERATION STATE]

The controller 34 determines that the proportional solenoid valve 26 or the proportional solenoid valve 27 is stuck at the soft side when the fifth operation state (the state having abnormality) is maintained for a predetermined certain time period, and switches the operation state from the fifth operation state to the sixth operation state. As illustrated in Fig. 15, in the sixth operation state, the proportional solenoid valve 26 (the extension-side damping force generation mechanism) is stuck at the soft side (powered off and a hard instruction). The proportional solenoid valve 27 (the compression-side damping force generation mechanism) is powered off and is fixed at the hard side. The pilot type shutoff valve 52 is provided with the pilot pressure to be set in the closed state. Further, the first open/close valve 47 is powered off and is set in the opened state.

During the extension stroke in the sixth operation state, the hydraulic fluid in the first cylinder chamber 2A is introduced into the flow passage 37, and is then introduced into the bypass passage 43 via the filter 38. Then, the hydraulic fluid introduced in to the bypass passage 43 is transmitted via the passive valve 46 and the first open/close valve 47, and is further transmitted via the flow passage 37 to be supplied into the second cylinder chamber 2B. At this time, the transmission of the hydraulic fluid via the passive valve 46 causes a damping force of the passive characteristic to be generated according to the flow of the hydraulic fluid, i.e., the movement speed of the piston 5. The hydraulic fluid for compensation for the volume of the piston rod 6 is supplied from the reservoir 4 into the second cylinder chamber 2B.

Further, during the compression stroke in the sixth operation state, the hydraulic fluid in the second cylinder chamber 2B is introduced into the first cylinder chamber 2A via the flow passage 9 and the check valve 10. Then, the hydraulic fluid for compensation for the volume of the piston rod 6 is introduced from the first cylinder chamber 2A into the flow passage 37, and is then introduced into the bypass passage 43 via the filter 38. Then, the hydraulic fluid introduced into the bypass passage 43 is transmitted via the passive valve 46 and the first open/close valve 47, and is further transmitted via the flow passage 37 to be supplied into the reservoir 4. At this time the transmission of the hydraulic fluid via the passive valve 46 causes a damping force of the passive characteristic to be generated according to the flow of the hydraulic fluid.

### [EFFECT]

According to the second embodiment, it is possible to acquire similar effects to the above-described first embodiment. Further, according to the second embodiment, the pilot type shutoff valve 52 (the valve mechanism) is used instead of the second open/close valve 42 (the electromagnetic solenoid valve) in the first embodiment, whereby it is possible to reduce manufacturing cost and reduce a load on the controller 34 compared to the first embodiment.

### [THIRD EMBODIMENT]

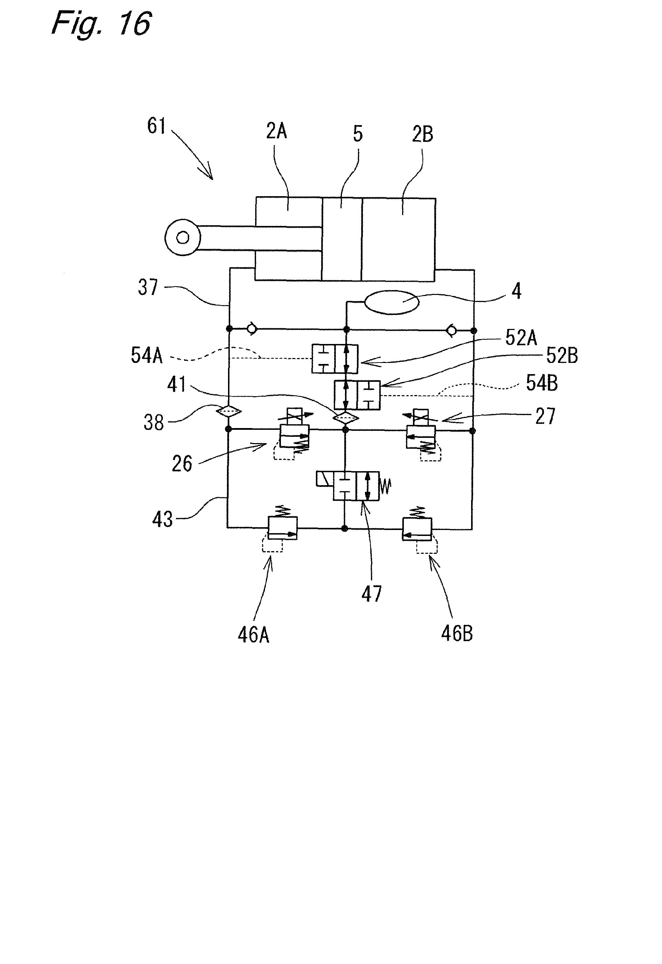

A third embodiment of the present invention will be described with reference to the accompanying drawings. Same or corresponding features as or to the above-described first and second embodiments will be identified by the same names and reference numerals. Further, for simplification of the description of the present disclosure, a description overlapping the first and second embodiments will be omitted below. As illustrated in Fig. 16, the third embodiment is such an embodiment that the configuration of the semi-active damper control system in the uniflow type hydraulic shock absorber 51 according to the second embodiment is applied to a biflow type hydraulic shock absorber (the hydraulic shock absorber) 61.

### [SEMI-ACTIVE CONTROL MODE]

Fig. 16 illustrates the control system when the control mode is the semi-active control mode according to the third embodiment. As illustrated in Fig. 16, in the semi-active control mode, a pilot type shutoff valve 52A and a pilot type shutoff valve 52B are set in the opened states. Further, the first open/close valve 47 (the valve mechanism) is powered on and is set in the closed state, thereby shutting off the flow of the hydraulic fluid to the bypass passage 43.

During the extension stroked in the semi-active control mode, the proportional solenoid valve 26 (the extension-side damping force generation mechanism) is subjected to the on-road control while the proportional solenoid valve 27 (the compression-side damping force generation mechanism) is subjected to the off-road control (fixed at the soft side). During this extension stroke, the hydraulic fluid in the first cylinder chamber 2A is introduced into the second cylinder chamber 2B via the filter 38, the proportional solenoid valve 26, the filter 41, the pilot type shutoff valve 52B, and the pilot type shutoff valve 52A. At this time, the transmission of the hydraulic fluid via the proportional solenoid valve 26 causes an extension-side damping force to be generated according to the control current supplied from the controller 34 to the electromagnetic solenoid of the proportional solenoid valve 26.

Further, during the compression stroke in the semi-active control mode, the proportional solenoid valve 27 is subjected to the on-road control while the proportional solenoid valve 26 is subjected to the off-road control (fixed at the soft side). During this compression stroke, the hydraulic fluid in the second cylinder chamber 2B is introduced into the first cylinder chamber 2A via the proportional solenoid valve 27, the filter 41, the pilot type shutoff valve 52B, and the pilot type shutoff valve 52A. At this time, the transmission of the hydraulic fluid via the proportional solenoid valve 27 causes a compression-side damping force to be generated according to the control current supplied from the controller 34 to the electromagnetic solenoid of the proportional solenoid valve 27.

### [FAILURE MODE]

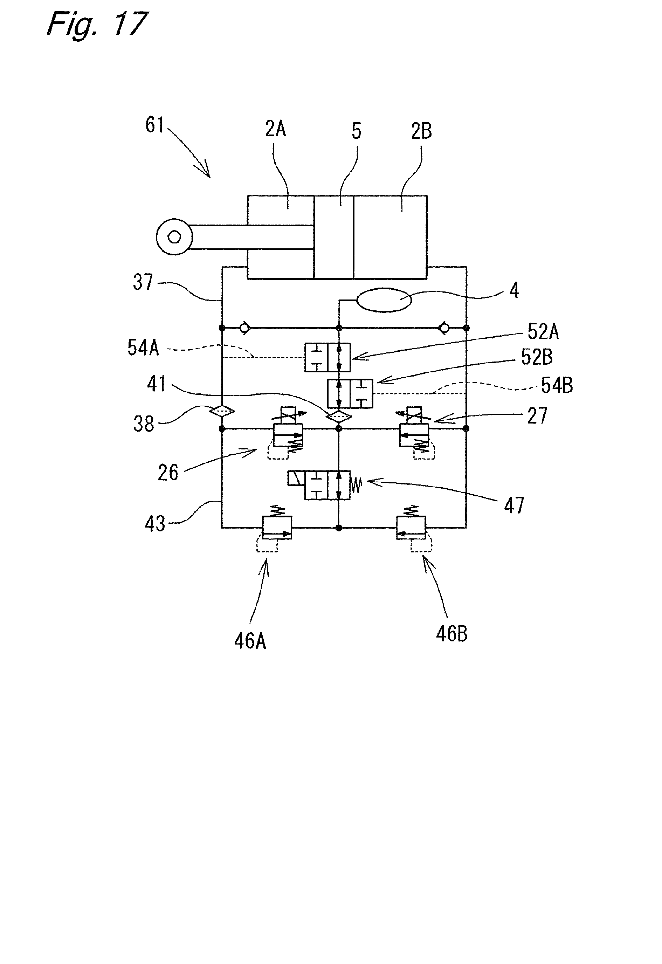

On the other hand, upon determining that a vibration of the vehicle body 32 exceeds the predetermined threshold value, the controller 34 determines that abnormality occurs in the control system, and switches the control mode from the semi-active control mode to the failure mode. Fig. 17 illustrates the control system when the control mode is the failure mode. In the failure mode, the proportional solenoid valve 26 (the extension-side damping force generation mechanism) and the proportional solenoid valve 27 (the compression-side damping force generation mechanism) are fixed at the hard side, and the first open/close valve 47 is powered off and is set in the opened state. Further, the pilot type shutoff valve 52A and the pilot type shutoff valve 52B (the valve mechanism) are set in the opened states.

During the extension stroke in the failure mode, the hydraulic fluid in the first cylinder chamber 2A is introduced into the second cylinder chamber 2B via the filter 38, a passive valve 46A (the passive damping force mechanism), the first open/close valve 47 (the valve mechanism), the filter 41, the pilot type shutoff valve 52B, and the pilot type shutoff valve 52A. At this time, the transmission of the hydraulic fluid via the passive valve 46A causes a damping force of the passive characteristic to be generated according to the flow of the hydraulic fluid, i.e., the movement speed of the piston 5. On the other hand, the control system may be configured in such a manner that the downstream side of the first open/close valve 47 is connected directly to the reservoir 4 without the filter 41, the pilot type shutoff valve 52B, and the pilot type shutoff valve 52A located therebetween.

Further, during the compression stroke in the failure mode, the hydraulic fluid in the second cylinder chamber 2B is introduced into the first cylinder chamber 2A via the passive valve 46A, the first open/close valve 47 (the valve mechanism), the filter 41, the pilot type shutoff valve 52B, and the pilot type shutoff valve 52A. At this time, the transmission of the hydraulic fluid via the passive valve 46A causes a damping force of the passive characteristic to be generated according to the flow of the hydraulic fluid.

### [PASSIVE MODE]

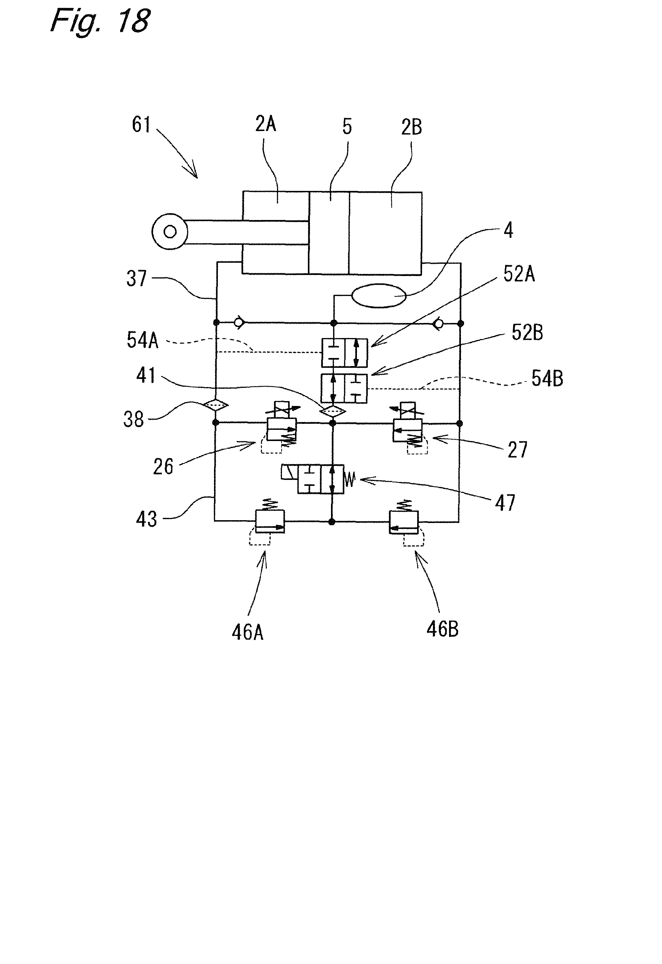

When a state having abnormality is maintained for the predetermined certain time period with the proportional solenoid valve 26 (the extension-side damping force generation mechanism) and the proportional solenoid valve 27 (the compression-side damping force generation mechanism) fixed at the hard side (the failure mode), the controller 34 determines that the proportional solenoid valve 26 or the proportional solenoid valve 27 is stuck at the soft side, and switches the control mode from the failure mode to the passive mode. Fig. 18 illustrates the control system in the passive mode with the proportional solenoid valve 27 (the extension-side damping force generation mechanism) stuck at the soft side (powered off and a hard instruction).

As illustrated in Fig. 18, in the passive mode, the valve opening pressure (super hard) of the proportional solenoid valve 26, which is not stuck at the soft side and is fixed at the hard side, is higher than the pilot pressure of the pilot type shutoff valve 52A, whereby the pilot type shutoff valve 52A is actuated and is closed. When the pilot type shutoff valve 52A is closed, the first open/close valve 47 is powered off and is opened. According to the third embodiment, the valve opening pressure of the passive valve 46A and the valve opening pressure (damping force) of a passive valve 46B are set to a same pressure.

During the extension stroke in the passive mode, the hydraulic fluid in the first cylinder chamber 2A is introduced into the second cylinder chamber 2B via the filter 38, the passive valve 46A, and the passive valve 46B. At this time, the transmission of the hydraulic fluid via the passive valve 46A causes a damping force of the passive characteristic to be generated according to the flow of the hydraulic fluid, i.e., the movement speed of the piston 5. Further, during the compression stroke in the passive mode, the hydraulic fluid in the second cylinder chamber 2B is introduced into the first cylinder chamber 2A via the passive valve 46B, the passive valve 46A, and the filter 38. At this time, the transmission of the hydraulic fluid via the passive valve 46B causes a damping force of the passive characteristic to be generated according to the flow of the hydraulic fluid.

### [EFFECT]

According to the third embodiment, it is possible to acquire similar effects to the above-described first and second embodiment. In the third embodiment, the first open/close valve 47 is embodied by a normally opened electromagnetic solenoid. However, the first open/close valve 47 may be embodied by a normally closed electromagnetic solenoid.

According to an aspect of the present invention, a hydraulic shock absorber, which is configured to be disposed between relatively displaceable members, includes a cylinder (2) sealingly containing hydraulic fluid, a piston (5) slidably fitted in the cylinder and dividing an interior of the cylinder into two chambers, a piston rod (6) having one end coupled to the piston and an opposite end extending out of the cylinder, an extension-side damping force generation mechanism (26) configured to adjust an extension-side damping force by controlling a flow of the hydraulic fluid and configured to be driven by a solenoid, a compression-side damping force generation mechanism (27) configured to adjust a compression-side damping force by controlling a flow of the hydraulic fluid and configured to be driven by a solenoid, and a control unit. The control unit includes a vibration detection unit (33) configured to detect a vibration transmitted to one of the members, and a damping force adjustment unit (34) configured to adjust control current values of the solenoids according to a detection value of the vibration detection unit to adjust damping forces generated by the extension-side damping force generation mechanism and the compression-side damping force generation mechanism between a hard side and a soft side. Upon determining that the detection value of the vibration detection unit remains larger than a predetermined value for a certain time period with the extension-side damping force generation mechanism and the compression-side damping force generation mechanism set to the hard side, the control unit determines that the extension-side damping force generation mechanism or the compression-side damping force generation mechanism is stuck at the soft side.

The above-described hydraulic shock absorber can further include a bypass passage (43) bypassing the extension-side damping force generation mechanism and the compression-side damping force generation mechanism, a passive damping force generation mechanism (46; 46A, 46B) disposed in the bypass passage and configured to generate a damping force of a passive characteristic according to a flow of the hydraulic fluid, and a valve mechanism (42, 47; 52; 52A, 52B) configured to be switched in such a manner that the damping force is generated by the passive damping force generation mechanism when the control unit determines that the extension-side damping force generation mechanism or the compression-side damping force generation mechanism is stuck at the soft side.

In the above-described hydraulic shock absorber, the valve mechanism can include a pilot type shutoff valve (52; 52A, 52B) configured to shut off a flow of the hydraulic fluid through the extension-side damping force generation mechanism and the compression-side damping force generation mechanism by a pressure in the cylinder and maintain a shutoff state after shutting off this flow.

In the above-described hydraulic shock absorber, the valve mechanism can include an open/close valve mechanism (47) disposed on a downstream side of the passive damping force generation mechanism (46; 46A, 46B).

In the above-described hydraulic shock absorber, the valve mechanism can include an open/close valve mechanism (52; 52A, 52B) disposed on a downstream side of the extension-side damping force generation mechanism (26) and the compression-side damping force generation mechanism (27).

In the above-described hydraulic shock absorber, the valve mechanism can include first and second pilot type shutoff valves (52A, 52B) disposed on the downstream side of the extension-side damping force generation mechanism (26) and the compression-side damping force generation mechanism (27). The first pilot type shutoff valve (52A) can be configured to be opened and closed by a hydraulic pressure in one (2A) of the chambers in the cylinder, and the second pilot type shutoff valve (52B) can be configured to be opened and closed by a hydraulic pressure in the other (2B) of the chambers in the cylinder.

In the above-described hydraulic shock absorber, the passive damping force generation mechanism can include a first passive damping force generation mechanism (46A) and a second passive damping force generation mechanism (46B). The valve mechanism can include the open/close valve mechanism (47) connected to a downstream side of the first passive damping force generation mechanism (46A) and the second passive damping force generation mechanism (46B).

In the above-described hydraulic shock absorber, the passive damping force generation mechanism can include the first passive damping force generation mechanism (46A) and the second passive damping force generation mechanism (46B). The valve mechanism can include the open/close valve mechanism (47) disposed in a flow passage that connects a branch point between the first passive damping force generation mechanism (46A) and the second passive damping force generation mechanism (46B) with a branch point between the extension-side damping force generation mechanism (26) and the compression-side damping force generation mechanism (27), and the first and second pilot type shutoff valves (52A, 52B) disposed in a flow passage that connects the branch point between the extension-side damping force generation mechanism (26) and the compression-side damping force generation mechanism (27) with the two chambers in the cylinder.

The above-described hydraulic shock absorber can be a biflow type hydraulic shock absorber.

The above-described can be a uniflow type hydraulic shock absorber. The piston (5) can include a check valve (10) that allows a unidirectional flow of the hydraulic fluid between the two chambers (2A, 2B) in the cylinder (2).

According to the above described embodiments, it is possible to detect that the damping force generation mechanism is stuck at the soft side.

Although only some exemplary embodiments of this invention have been described in detail above, those skilled in the art will readily appreciate that many modifications are possible in the exemplary embodiments without materially departing from the novel teaching and advantages of this invention. Accordingly, all such modifications are intended to be included within the scope of this invention.

The scope of protection is defined by the appended claims.

## Claims

1. A hydraulic shock absorber configured to be disposed between relatively displaceable members, the hydraulic shock absorber comprising:
a cylinder (2) sealingly containing hydraulic fluid;
a piston (5) slidably fitted in the cylinder, and dividing an interior of the cylinder into two chambers (2A, 2B);
a piston rod (6) having one end coupled to the piston and an opposite end extending out of the cylinder;
an extension-side damping force generation mechanism (26) configured to adjust an extension-side damping force by controlling a flow of the hydraulic fluid, and configured to be driven by a solenoid;
a compression-side damping force generation mechanism (27) configured to adjust a compression-side damping force by controlling a flow of the hydraulic fluid, and configured to be driven by a solenoid; and
a control unit,
wherein the control unit includes
a vibration detection unit (33) configured to detect a vibration transmitted to one of the members, and
a damping force adjustment unit (34) configured to adjust control current values of the solenoids according to a detection value of the vibration detection unit to adjust damping forces generated by the extension-side damping force generation mechanism and the compression-side damping force generation mechanism between a hard side and a soft side,
wherein, upon determining that the detection value of the vibration detection unit remains larger than a predetermined value for a certain time period with the extension-side damping force generation mechanism and the compression-side damping force generation mechanism set to the hard side, the control unit determines that the extension-side damping force generation mechanism or the compression-side damping force generation mechanism is stuck at the soft side.

2. The hydraulic shock absorber according to claim 1, further comprising
a bypass passage (43) bypassing the extension-side damping force generation mechanism and the compression-side damping force generation mechanism;
a passive damping force generation mechanism (46; 46A, 46B) disposed in the bypass passage, and configured to generate a damping force of a passive characteristic according to a flow of the hydraulic fluid; and
a valve mechanism (42, 47; 52, 47; 52A, 52B, 47) configured to be switched in such a manner that the damping force is generated by the passive damping force generation mechanism, when the control unit determines that the extension-side damping force generation mechanism or the compression-side damping force generation mechanism is stuck at the soft side.

3. The hydraulic shock absorber according to claim 2, wherein the valve mechanism includes a pilot type shutoff valve (52; 52A, 52B) configured to shut off a flow of the hydraulic fluid through the extension-side damping force generation mechanism and the compression-side damping force generation mechanism by a pressure in the cylinder, and maintain a shutoff state after shutting off this flow.

4. The hydraulic shock absorber according to claim 2 or 3, wherein the valve mechanism includes an open/close valve mechanism (47) disposed on a downstream side of the passive damping force generation mechanism (46; 46A, 46B).

5. The hydraulic shock absorber according to any of claims 2 to 4, wherein the valve mechanism includes an open/close valve mechanism (52; 52A, 52B) disposed on a downstream side of the extension-side damping force generation mechanism (26) and the compression-side damping force generation mechanism (27).

6. The hydraulic shock absorber according to any of claims 2 to 5, wherein the valve mechanism includes first and second pilot type shutoff valves (52A, 52B) disposed on a downstream side of the extension-side damping force generation mechanism (26) and the compression-side damping force generation mechanism (27), and
wherein the first pilot type shutoff valve (52A) is configured to be opened and closed by a hydraulic pressure in one (2A) of the chambers in the cylinder, and the second pilot type shutoff valve (52B) is configured to be opened and closed by a hydraulic pressure in the other (2B) of the chambers in the cylinder.

7. The hydraulic shock absorber according to any of claims 2 to 6, wherein the passive damping force generation mechanism includes a first passive damping force generation mechanism (46A) and a second passive damping force generation mechanism (46B), and
wherein the valve mechanism includes an open/close valve mechanism (47) connected to a downstream side of the first passive damping force generation mechanism (46A) and the second passive damping force generation mechanism (46B).

8. The hydraulic shock absorber according to claim 2 or 3, wherein the passive damping force generation mechanism includes a first passive damping force generation mechanism (46A) and a second passive damping force generation mechanism (46B), and
wherein the valve mechanism includes an open/close valve mechanism (47) disposed in a flow passage that connects a branch point between the first passive damping force generation mechanism (46A) and the second passive damping force generation mechanism (46B) with a branch point between the extension-side damping force generation mechanism (26) and the compression-side damping force generation mechanism (27), and
first and second pilot type shutoff valves (52A, 52B) disposed in a flow passage that connects the branch point between the extension-side damping force generation mechanism (26) and the compression-side damping force generation mechanism (27) with the two chambers in the cylinder.

9. The hydraulic shock absorber according to any of claims 1 to 8, wherein the hydraulic shock absorber is a biflow type hydraulic shock absorber.

10. The hydraulic shock absorber according to any of claims 1 to 6, wherein the hydraulic shock absorber is a uniflow type hydraulic shock absorber, and
wherein the piston (5) includes a check valve (10) that allows a unidirectional flow of the hydraulic fluid between the two chambers (2A, 2B) in the cylinder (2).

## Patentansprüche

1. Hydraulischer Stoßdämpfer, der eingerichtet ist, zwischen relativ versetzbaren Bauteilen angeordnet zu werden, wobei der hydraulische Stoßdämpfer umfasst:
einen Zylinder (2), der eine Hydraulikflüssigkeit versiegelnd enthält;
einen Kolben (5), der verschiebbar in dem Zylinder eingepasst ist und einen Innenraum des Zylinders in zwei Kammern (2A, 2B) einteilt;
eine Kolbenstange (6) mit einem mit dem Kolben verbundenen Ende und einem sich aus dem Zylinder erstreckenden, entgegengesetzten Ende;
einen ausfahrseitigen Dämpfungskraft-Erzeugungsmechanismus (26), der eingerichtet ist zum Anpassen einer ausfahrseitigen Dämpfungskraft durch Steuern eines Flusses der Hydraulikflüssigkeit und der eingerichtet ist, von einem Solenoid angetrieben zu werden;
einen kompressionsseitigen Dämpfungskraft-Erzeugungsmechanismus (27), der eingerichtet ist zum Anpassen einer kompressionsseitigen Dämpfungskraft durch Steuern eines Flusses der Hydraulikflüssigkeit und der eingerichtet ist, von einem Solenoid angetrieben zu werden; und
eine Steuereinheit,
wobei die Steuereinheit enthält
eine Vibrationserfassungseinheit (33), die eingerichtet ist zum Erfassen einer von einem der Bauteile übertragenen Vibration, und
eine Dämpfungskraft-Anpassungseinheit (34), die eingerichtet ist zum Anpassen von Steuerstromwerten der Solenoide gemäß einem Erfassungswert der Vibrationserfassungseinheit, um Dämpfungskräfte anzupassen, erzeugt von dem ausfahrseitigen Dämpfungskraft-Erzeugungsmechanismus und dem kompressionsseitigen Dämpfungskraft-Erzeugungsmechanismus, zwischen einer harten Seite und einer weichen Seite,
wobei, beim Bestimmen, dass der Erfassungswert der Vibrationserfassungseinheit größer als ein vorbestimmter Wert für eine bestimmte Zeitperiode bleibt, wobei der ausfahrseitige Dämpfungskraft-Erzeugungsmechanismus und der kompressionsseitige Dämpfungskraft-Erzeugungsmechanismus auf die harte Seite eingestellt sind, die Steuereinheit bestimmt, dass der ausfahrseitige Dämpfungskraft-Erzeugungsmechanismus oder der kompressionsseitige Dämpfungskraft-Erzeugungsmechanismus auf der weichen Seite fest steckt.

2. Hydraulischer Stoßdämpfer nach Anspruch 1, weiterhin umfassend
einen Umgehungsdurchlass (43), der den ausfahrseitigen Dämpfungskraft-Erzeugungsmechanismus und den kompressionsseitigen Dämpfungskraft-Steuermechanismus umgeht;
einen passiven Dämpfungskraft-Erzeugungsmechanismus (46; 46A, 46B), der in dem Umgehungsdurchlass angeordnet ist und der eingerichtet ist zum Erzeugen einer Dämpfungskraft mit einer passiven Charakteristik gemäß einem Fluss der Hydraulikflüssigkeit; und
einen Ventilmechanismus (42, 47; 52, 47; 52A, 52B, 47) der eingerichtet ist, derart geschaltet zu werden, dass die Dämpfungskraft von dem passiven Dämpfungskraft-Erzeugungsmechanismus erzeugt wird, wenn die Steuereinheit bestimmt, dass der ausfahrseitige Dämpfungskraft-Erzeugungsmechanismus oder der kompressionsseitige Dämpfungskraft-Erzeugungsmechanismus auf der weichen Seite fest steckt.

3. Hydraulischer Stoßdämpfer nach Anspruch 2, wobei der Ventilmechanismus ein Sperrventil vom Pilottyp (52; 52A, 52B) enthält, das eingerichtet ist zum Sperren eines Flusses der Hydraulikflüssigkeit durch den ausfahrseitigen Dämpfungskraft-Erzeugungsmechanismus und den kompressionsseitigen Dämpfungskraft-Erzeugungsmechanismus durch einen Druck in dem Zylinder und zum Beibehalten eines Sperrzustands nach Sperren dieses Flusses.

4. Hydraulischer Stoßdämpfer nach Anspruch 2 oder 3, wobei der Ventilmechanismus einen Öffnung-/Schließ-Ventilmechanismus (47) enthält, der auf einer nachgelagerten Seite des passiven Dämpfungskraft-Erzeugungsmechanismus (46; 46A, 46B) angeordnet ist.

5. Hydraulischer Stoßdämpfer nach einem der Ansprüche 2-4, wobei der Ventilmechanismus einen Öffnung-/Schließ-Ventilmechanismus (47) enthält, der auf einer nachgelagerten Seite des ausfahrseitigen Dämpfungskraft-Erzeugungsmechanismus (26) und des kompressionsseitigen Dämpfungskraft-Erzeugungsmechanismus (27) angeordnet ist.

6. Hydraulischer Stoßdämpfer nach einem der Ansprüche 2-5, wobei der Ventilmechanismus erste und zweite Sperrventile vom Pilottyp (52A, 52B) enthält, die auf einer nachgelagerten Seite des ausfahrseitigen Dämpfungskraft-Erzeugungsmechanismus (26) und des kompressionsseitigen Dämpfungskraft-Erzeugungsmechanismus (27) angeordnet sind, und
wobei das erste Sperrventil vom Pilottyp (52A) eingerichtet ist, durch einen hydraulischen Druck in einer (2A) der Kammern in dem Zylinder geöffnet und geschlossen zu werden, und das zweite Sperrventil (52B) vom Pilottyp eingerichtet ist, durch einen hydraulischen Druck in der anderen (2B) der Kammern in dem Zylinder geöffnet und geschlossen zu werden.

7. Hydraulischer Stoßdämpfer nach einem der Ansprüche 2-6, wobei der passive Dämpfungskraft-Erzeugungsmechanismus einen ersten passiven Dämpfungskraft-Erzeugungsmechanismus (46A) und einen zweiten passiven Dämpfungskraft-Erzeugungsmechanismus (46B) enthält, und
wobei der Ventilmechanismus einen Öffnung-/Schließ-Ventilmechanismus (47) enthält, der mit einer nachgelagerten Seite des ersten passiven Dämpfungskraft-Erzeugungsmechanismus (46A) und des zweiten passiven Dämpfungskraft-Erzeugungsmechanismus (46B) verbunden ist.

8. Hydraulischer Stoßdämpfer nach Anspruch 2 oder 3, wobei der passive Dämpfungskraft-Erzeugungsmechanismus einen ersten passiven Dämpfungskraft-Erzeugungsmechanismus (46A) und einen zweiten passiven Dämpfungskraft-Erzeugungsmechanismus (46B) enthält, und
wobei der Ventilmechanismus einen Öffnung-/Schließ-Ventilmechanismus (47) enthält, der in einem Flussdurchlass angeordnet ist, der einen Abzweigungspunkt zwischen dem ersten passiven Dämpfungskraft-Erzeugungsmechanismus (46A) und dem zweiten passiven Dämpfungskraft-Erzeugungsmechanismus (46B) mit einem Abzweigungspunkt zwischen dem ausfahrseitigen Dämpfungskraft-Erzeugungsmechanismus (26) und dem kompressionsseitigen Dämpfungskraft-Erzeugungsmechanismus (27) verbindet, und
erste und zweite Sperrventile vom Pilottyp (52A, 52B), die in einem Flussdurchlass angeordnet sind, der den Abzweigungspunkt zwischen dem ausfahrseitigen Dämpfungskraft-Erzeugungsmechanismus (26) und dem kompressionsseitigen Dämpfungskraft-Erzeugungsmechanismus (27) mit den zwei Kammern in dem Zylinder verbindet.

9. Hydraulischer Stoßdämpfer nach einem der Ansprüche 1-8, wobei der hydraulische Stoßdämpfer ein hydraulischer Stoßdämpfer vom Biflusstyp ist.

10. Hydraulischer Stoßdämpfer nach einem der Ansprüche 1-6, wobei der hydraulische Stoßdämpfer ein hydraulischer Stoßdämpfer vom Uniflusstyp ist, und
wobei der Kolben (5) ein Überprüfungsventil (10) enthält, das einen Fluss der Hydraulikflüssigkeit in einer Richtung zwischen den zwei Kammern (2A, 2B) in dem Zylinder (2) erlaubt.

## Revendications

1. Amortisseur hydraulique configuré pour être disposé entre des éléments pouvant se déplacer l'un par rapport à l'autre, l'amortisseur hydraulique comprenant :
un cylindre (2) contenant de manière étanche un fluide hydraulique ;
un piston (5) monté en coulissement dans le cylindre, et divisant un intérieur du cylindre en deux chambres (2A, 2B) ;
une tige de piston (6) ayant une extrémité couplée au piston et une extrémité opposée s'étendant hors du cylindre ;
un mécanisme de génération de force d'amortissement du côté extension (26) configuré pour ajuster une force d'amortissement du côté extension en commandant un écoulement du fluide hydraulique, et configuré pour être entraîné par un solénoïde ;
un mécanisme de génération de force d'amortissement du côté compression (27) configuré pour ajuster une force d'amortissement du côté compression en commandant un écoulement du fluide hydraulique, et configuré pour être entraîné par un solénoïde ; et
une unité de commande,
dans lequel l'unité de commande comporte
une unité de détection de vibration (33) configurée pour détecter une vibration transmise à l'un des éléments, et
une unité d'ajustement de force d'amortissement (34) configurée pour ajuster des valeurs de courant de commande des solénoïdes selon une valeur de détection de l'unité de détection de vibration pour ajuster les forces d'amortissement générées par le mécanisme de génération de force d'amortissement du côté extension et le mécanisme de génération de force d'amortissement du côté compression entre un côté dur et un côté souple,
dans lequel, lors de la détermination du fait que la valeur de détection de l'unité de détection de vibration reste supérieure à une valeur prédéterminée pendant une certaine période de temps avec le mécanisme de génération de force d'amortissement du côté extension et le mécanisme de génération de force d'amortissement du côté compression mis au côté dur, l'unité de commande détermine que le mécanisme de génération de force d'amortissement du côté extension ou le mécanisme de génération de force d'amortissement du côté compression est bloqué au côté souple.

2. Amortisseur hydraulique selon la revendication 1, comprenant en outre
un passage de dérivation (43) contournant le mécanisme de génération de force d'amortissement du côté extension et le mécanisme de génération de force d'amortissement du côté compression ;
un mécanisme passif de génération de force d'amortissement (46 ; 46A, 46B) disposé dans le passage de dérivation, et configuré pour générer une force d'amortissement d'une caractéristique passive selon un écoulement du fluide hydraulique ; et
un mécanisme de soupape (42, 47 ; 52, 47 ; 52A, 52B, 47) configuré pour être commuté de sorte que la force d'amortissement soit générée par le mécanisme passif de génération de force d'amortissement, lorsque l'unité de commande détermine que le mécanisme de génération de force d'amortissement du côté extension ou le mécanisme de génération de force d'amortissement du côté compression est bloqué au côté souple.

3. Amortisseur hydraulique selon la revendication 2, dans lequel le mécanisme de soupape comporte une soupape d'arrêt de type pilote (52 ; 52A, 52B) configurée pour arrêter un écoulement du fluide hydraulique à travers le mécanisme de génération de force d'amortissement du côté extension et le mécanisme de génération de force d'amortissement du côté compression par une pression dans le cylindre, et pour maintenir un état d'arrêt après avoir arrêté cet écoulement.

4. Amortisseur hydraulique selon la revendication 2 ou 3, dans lequel le mécanisme de soupape comporte un mécanisme de soupape d'ouverture/fermeture (47) disposé sur un côté aval du mécanisme passif de génération de force d'amortissement (46 ; 46A, 46B).

5. Amortisseur hydraulique selon l'une des revendications 2 à 4, dans lequel le mécanisme de soupape comporte un mécanisme de soupape d'ouverture/fermeture (52 ; 52A, 52B) disposé sur un côté aval du mécanisme de génération de force d'amortissement du côté extension (26) et du mécanisme de génération de force d'amortissement du côté compression (27).

6. Amortisseur hydraulique selon l'une quelconque des revendications 2 à 5, dans lequel le mécanisme de soupape comporte des première et deuxième soupapes d'arrêt de type pilote (52A, 52B) disposées sur un côté aval du mécanisme de génération de force d'amortissement du côté extension (26) et du mécanisme de génération de force d'amortissement du côté compression (27), et
dans lequel la première soupape d'arrêt de type pilote (52A) est configurée pour être ouverte et fermée par une pression hydraulique dans l'une (2A) des chambres dans le cylindre, et la deuxième soupape d'arrêt de type pilote (52B) est configurée pour être ouverte et fermée par une pression hydraulique dans l'autre (2B) des chambres dans le cylindre.

7. Amortisseur hydraulique selon l'une des revendications 2 à 6, dans lequel le mécanisme passif de génération de force d'amortissement comporte un premier mécanisme passif de génération de force d'amortissement (46A) et un deuxième mécanisme passif de génération de force d'amortissement (46B), et
dans lequel le mécanisme de soupape comporte un mécanisme de soupape d'ouverture/fermeture (47) relié à un côté aval du premier mécanisme passif de génération de force d'amortissement (46A) et du deuxième mécanisme passif de génération de force d'amortissement (46B).

8. Amortisseur hydraulique selon la revendication 2 ou 3, dans lequel le mécanisme passif de génération de force d'amortissement comporte un premier mécanisme passif de génération de force d'amortissement (46A) et un deuxième mécanisme passif de génération de force d'amortissement (46B), et
dans lequel le mécanisme de soupape comporte un mécanisme de soupape d'ouverture/fermeture (47) disposé dans un passage d'écoulement qui relie un point de ramification entre le premier mécanisme passif de génération de force d'amortissement (46A) et le deuxième mécanisme passif de génération de force d'amortissement (46B) avec un point de ramification entre le mécanisme de génération de force d'amortissement du côté extension (26) et le mécanisme de génération de force d'amortissement du côté compression (27), et
des première et deuxième soupapes d'arrêt de type pilote (52A, 52B) disposées dans un passage d'écoulement qui relie le point de ramification entre le mécanisme de génération de force d'amortissement du côté extension (26) et le mécanisme de génération de force d'amortissement du côté compression (27) aux deux chambres dans le cylindre.

9. Amortisseur hydraulique selon l'une des revendications 1 à 8, dans lequel l'amortisseur hydraulique est un amortisseur hydraulique de type à double écoulement.

10. Amortisseur hydraulique selon l'une des revendications 1 à 6, dans lequel l'amortisseur hydraulique est un amortisseur hydraulique de type à écoulement unique, et
dans lequel le piston (5) comporte une soupape antiretour (10) qui permet un écoulement unidirectionnel du fluide hydraulique entre les deux chambres (2A, 2B) dans le cylindre (2).
